# EUROPÄISCHE PATENTSCHRIFT

(11) **EP 2 642 874 B1**
(45) Veröffentlichungstag und Bekanntmachung des Hinweises auf die Patenterteilung: **12.06.2019**
(21) Anmeldenummer: 11807851.8
(22) Anmeldetag: 25.11.2011
(51) Int. Cl.: A23K 20/105, A23K 20/111, A23K 20/20

(54) **FUTTERMITTELZUSATZ**
FEEDSTUFF ADDITIVE
ADDITIF POUR PRODUITS ALIMENTAIRES POUR ANIMAUX

(30) Priorität: 26.11.2010 AT 7292010 U
(43) Veröffentlichungstag der Anmeldung: 02.10.2013
(73) Patentinhaber: Erber Aktiengesellschaft, 3130 Herzogenburg (AT) (AT)
(72) Erfinder: PASTEINER, Sigrid, A-3100 St. Pölten (AT); BINDER, Eva, Maria, A-3430 Tulln (AT)
(74) Vertreter: Cunow, Gerda
(86) Internationale Anmeldenummer: PCT/AT2011/000477
(87) Internationale Veröffentlichungsnummer: WO 2012/068609

(56) Entgegenhaltungen:
- EP-A1- 0 219 997
- EP-A1- 0 861 599
- EP-A1- 1 843 667
- EP-A2- 0 236 988
- WO-A1-96/35337
- WO-A2-2004/089106
- DE-C1- 3 628 248
- JP-A- S5 692 746
- US-A- 6 033 689
- J.-P. JOUANY ET AL: "Use of 'natural' products as alternatives to antibiotic feed additives in ruminant production", ANIMAL, Bd. 1, Nr. 10, 1. November 2007 (2007-11-01), XP55019806, ISSN: 1751-7311, DOI: 10.1017/S1751731107000742
- DATABASE WPI Week 200966 Thomson Scientific, London, GB; AN 2009-N36511 -& CN 101 513 222 A (MAILUN XIAMEN BIOLOGICAL TECHNOLOGY CO L) 26 August 2009 (2009-08-26)

## Beschreibung

Die vorliegende Erfindung bezieht sich auf einen Futtermittelzusatz enthaltend eine Säuremischung, welche wenigstens eine niedermolekulare, organische Monocarbonsäure gewählt aus Ameisensäure, Propionsäure, Essigsäure, Milchsäure oder Glukonsäure, sowie entweder eine weitere organische Monocarbonsäure oder eine anorganische Säure und einen festen oder flüssigen Träger enthält.

Gegenwärtig wird das Ansäuern von Futtermitteln mit organischen Säuren oder auch anorganischen Säuren und deren Salzen weit verbreitet für den Zweck der Futtermittelkonservierung verwendet. Weiterhin besitzen insbesondere organische Säuren, welche auch im Magen-Darm-Trakt durch mikrobielle Fermentation von Kohlenhydraten direkt gebildet werden, eine Vielzahl von positiven Effekten in verschiedensten Bereichen der Tierernährung, nämlich einerseits für die Konservierung des Futters selbst, andererseits für den Magen-Darm-Trakt von Tieren. Schließlich ist nicht außer Acht zu lassen, dass verschiedenste organische Säuren auch als eine Energiequelle sowie zur Wachstumsförderung für Nutztiere, wie beispielsweise Schweine, Hühner und Fische verwendet werden können.

Durch das Absenken des pH-Werts in dem Futtermittel selbst ebenso wie in dem Magen-Darm-Trakt von Tieren bewirkt daher der Zusatz von speziellen Säuren zu dem Futtermittel, dass die Lebensbedingungen für potentiell pathogene Mikroorganismen deutlich verschlechtert werden. So konnte gezeigt werden, dass die Wachstumsraten von pathogenen Bakterien, wie E-coli oder Salmonellen bei niedrigen pH-Werten abgesenkt werden können, während auf den Organismus positiv wirkende Bakterien, wie beispielsweise Lactobazillen üblicherweise weniger im Wachstum durch den Zusatz von Säure zu dem Futtermittel gehindert werden.

Auch die Konservierung von Futtermitteln durch organische Säuren hat ergeben, dass diese die Anzahl der Mikroorganismen in dem Futtermittel absenkt, insbesondere aufgrund der Tatsache, dass üblicherweise in dem Futtermittel immer gewisse Spuren von Schimmelpilzen enthalten sind, von welchen Schimmeln bekannt ist, dass sie Mykotoxine produzieren, welche sehr schwere gesundheitliche Beeinträchtigungen bei Tieren bewirken können.

Neben diesen Eigenschaften gibt es jedoch auch einen direkten, anti-mikrobiellen Effekt von organischen Säuren, welche in ihrer nicht dissoziierten Form fähig sind, durch semipermeable, bakterielle Zellwände, insbesondere durch jene von Gram negativen Bakterien zu penetrieren. Im Inneren des Zellzytoplasmas dissoziieren die Säuren, wodurch sie den intrazellulären, bakteriellen pH-Wert absenken. Als Folge dieses Absenkens beginnen die Zellen Energie zu verwenden, um ihren ursprünglichen pH-Wert wieder herzustellen, so dass im Endeffekt der bakterielle Metabolismus durch Inhibieren der Zellenzyme und der Nahrungstransportsysteme unterbrochen wird.

Trotz der Vielzahl von positiven Effekten von Säuren, insbesondere Säuremischungen oder auch organischen Säuren alleine auf sowohl die Qualität des Futtermittels als auch betreffend die Gesundheits- und Leistungsförderung von Tieren bestehen Probleme, dass einerseits der pH-Wert des Futtermittels unter eine gewisse Grenze nicht abgesenkt werden soll, da sonst die Futtermittel von den Tieren nicht mehr angenommen werden und nicht zum Verzehr geeignet sind, dass darüber hinaus vor allem der anti-mikrobielle Effekt von bekannten Säuren und Säuregemischen, welche insbesondere zum Unterdrücken des Wachstums von Gram negativen Bakterien eingesetzt werden, nicht befriedigend ist und deutlich verbessert werden kann. Darüber hinaus darf nicht außer Acht gelassen werden, dass zu niedrige pH-Werte neben den obigen Nachteilen bzw. möglichen Problemen auch zu Korrosionen, beispielsweise von Futtermischern führen können und somit im schlimmsten Fall das gesamte damit hergestellte Futtermittel nicht mehr verwendet werden kann bzw. darf.

Aus der EP 0 219 997 A1 ist ein antimikrobieller Futtermittelzusatz bekannt geworden, bestehend aus einer Mischung aus Ameisensäure und Propionsäure, welcher eine verbesserte Wirksamkeit besitzen soll.

Aus der DE 36 28 248 C1 ist ein Mittel zur Leistungsförderung für Schweine und Geflügel bekannt geworden, enthaltend eine Mischung aus Salzen der Ameisensäure und Phosphorsäure oder einem sauren Salz der Phosphorsäure, mit welchem Futtermittelzusatz eine Verminderung von Durchfallerkrankungen bei den Tieren erzielt werden soll.

Aus der WO 96/35337 A1 ist ein Futtermittelzusatz ebenso wie ein Futtermittel bekannt geworden, enthaltend verschiedene Salze der Ameisensäure.

Aus der US 6 033 689 A ist ein Futtermittelzusatz aus verschieden ausgewählten Zuckern und einer Dicarbonsäure bekannt geworden, mit welchem die Milchproduktion in der frühen Laktationsphase auf einem hohen Niveau gehalten werden soll.

Aus der EP 0 236 988 A2 ist ein Verfahren zur Förderung des Wachstums und der Gesundheit von Nutzpflanzen bekannt geworden, bei welchem verschiedene Aminosäuren und organische Mono- und Dicarbonsäuren eingesetzt werden.

Dem Dokument von J.-P. Jouany ET AL., Animal (2007), 1:10, pp 1443-1466 ist die Verwendung von natürlichen Produkten als Alternative zur Antibiotikagabe bei Tieren entnehmbar, wobei auch eine Liste von Säuren, welche eingesetzt werden können, beschrieben ist. Auch Pflanzen und Pflanzenextrakte und Enzyme sind in diesem Zusammenhang geoffenbart.

Aus der CN101513222A ist eine Emulgierungstechnik bekannt geworden, mit deren Hilfe ein Futtersäuerungsmittel erstellt werden kann, welches Futtersäuerungsmittel folgende Komponenten mit den angegebenen Gewichtsanteilen beinhaltet: Zitronensäure: 8-10 Gewichtsanteile; Fumarsäure: 2-20 Gewichtsanteile; Phosphorsäure: 10-15 Gewichtsanteile; Apfelsäure: 5-20 Gewichtsanteile; Milchsäure: 15-25 Gewichtsanteile; Ameisensäure: 6-15 Gewichtsanteile; Essigsäure: 2-10 Gewichtsanteile; Mundgefühlmodifikator: 2-5 Gewichtsanteile; Silika: 3-5 Gewichtsanteile.

Schließlich ist der EP 0 861 599 A1 die Verwendung von Dicarbonsäuren als Tierfuttermittelbestandteil entnehmbar, mit welchen der Aminosäurebedarf der Tiere verringert werden soll.

Die vorliegende Erfindung zielt nun darauf ab, einen Futtermittelzusatz zur Verfügung zu stellen, mit welchem es gelingt, durch Kombination von verschiedenen Säuren das Wachstum von Gram negativen Bakterien ohne Erhöhung der gesamten eingesetzten Säuremenge und ohne Verringerung des pH-Werts der Säuremischung gegenüber herkömmlichen, eingesetzten Säuren und Säuremischungen weiter herabzusetzen.

Zur Lösung dieser Aufgabe ist der erfindungsgemäße Futtermittelzusatz, welcher eine Säuremischung enthält, im Wesentlichen dadurch gekennzeichnet, dass die Säuremischung zusätzlich wenigstens eine niedermolekulare, organische Dicarbonsäure, gewählt aus Glutaminsäure, Weinsäure, Korksäure, Malonsäure, Bernsteinsäure, Apfelsäure oder Maleinsäure enthält und dass zusätzlich zwischen 0,01 % und 1 % eines Polyphenols wie Tanninsäure, Kaffeesäure, Ellagsäure, Perillasäure oder Gallussäure, oder zwischen 0,1 % und 5 % eines phenolischen Aldehyds enthalten sind. Indem der Säuremischung zusätzlich wenigstens eine niedermolekulare, organische Dicarbonsäure gewählt aus Glutaminsäure, Weinsäure, Korksäure, Malonsäure, Bernsteinsäure, Apfelsäure oder Maleinsäure zugesetzt ist, hat sich überraschenderweise gezeigt, dass es ohne weiteres Absenken des pH-Werts des Futtermittels gelingt, eine synergistische Wirkung sämtlicher in der Säuremischung enthaltenen Säuren zu erzielen, wodurch es gelingt, die Keimzahlen von Gram negativen Bakterien, insbesondere Salmonellen und E-coli weiter abzusenken bzw. in manchen Fällen sogar vollständig zu eliminieren und sowohl im Futtermittel selbst als auch im Magen-Darm-Trakt der Tiere nahezu vollständig zu inaktivieren. Eine weiter verbesserte Wirkung des Futtermittelzusatzes wird dadurch erzielt, dass zusätzlich zwischen 0,01 % und 1 % eines Polyphenols wie Tanninsäure, Kaffeesäure, Ellagsäure, Perillasäure oder Gallussäure enthalten sind. Indem zusätzlich geringe Konzentrationen eines Polyphenols, wie Ellagsäure, der Säuremischung bzw. dem Futtermittelzusatz zugesetzt werden, gelingt eine weitere Verstärkung der anti-mikrobiellen Wirkung des Futtermittelzusatzes, insbesondere über eine verlängerte Zeitdauer, so dass bei Verfütterung auch ein Abbau dieser Bakterien im gesamten Magen-Darm-Trakt von Tieren nahezu gleichbleibend und gleichmäßig aufrecht erhalten werden kann, wodurch eine weitere Leistungssteigerung und eine verringerte Zahl von Ausfällen aufgrund von Durchfallerkrankungen von Tieren bei gleichzeitig geringen Mengen an eingesetzter Säuremischung erzielbar sind. Indem zusätzlich zwischen 0,1 % und 5 % eines phenolischen Aldehyds enthalten sind, gelingt es neben einer Geschmacksverbesserung des Futtermittelzusatzes das Wirkungsspektrum desselben weiter zu erhöhen und insbesondere die Langzeitwirkung im gesamten Magen-Darm-Trakt weiter zu verbessern, wodurch eine verbesserte Futterumwandlung und somit eine Leistungssteigerung und auch eine Verkürzung der Dauer von Durchfallerkrankungen der damit gefütterten Tiere erzielbar ist.

Aufgrund ihres Vorhandenseins in verschiedensten Naturstoffen und ihrer meist guten Löslichkeit in Wasser ist einerseits der Einsatz der niedrigmolekularen, organischen Dicarbonsäuren gewählt aus Glutaminsäure, Weinsäure, Korksäure, Malonsäure, Bernsteinsäure, Apfelsäure oder Maleinsäure, als unbedenklich anzusehen und andererseits hat sich in überraschender Weise gezeigt, dass die gewählten niedermolekularen, organischen Dicarbonsäuren die Wirkung von bekannten Säuremischungen gegenüber Gram negativen Bakterien in Kombination mit den üblicherweise eingesetzten, organischen oder anorganischen Säuren bedeutend stärker als bei Einsatz der Einzelkomponenten verbessern können.

Die Verbesserungswirkung tritt insbesondere bei niedrigen Konzentrationen der zugesetzten organischen Dicarbonsäuren zu den in Futtermittelzusätzen enthaltenen Säuremischungen auf, wobei bevorzugt gemäß der vorliegenden Erfindung in der Säuremischung des Futtermittelzusatzes zwischen 0,035 % und 35 %, insbesondere 7 % bis 13 % niedermolekulare, organische Dicarbonsäuren enthalten sind. Ein Zusatz derartiger Konzentrationen an niedermolekularen, organischen Dicarbonsäuren zu der Säuremischung bewirkt aufgrund der daraus folgenden, geringen Konzentrationen von Dicarbonsäuren in dem Futtermittelzusatz einerseits keine weitere Absenkung des pH-Werts des Gesamtprodukts und andererseits bewirkt er jedoch eine nahezu vollständige inaktivierung von Gram negativen Bakterien, wie E-coli und Salmonellen sowohl im damit versetzten Futtermittel als auch im Magen-Darm-Trakt von Tieren.

Um eine weitere Verstärkung dieser synergistischen Wirkung zu erzielen, ist der Futtermittelzusatz gemäß der vorliegenden Erfindung bevorzugt so weitergebildet, dass zwei niedermolekulare, organische Dicarbonsäuren enthalten sind. Der Einsatz von zwei niedermolekularen, organischen Dicarbonsäuren in einer Säuremischung gemäß der vorliegenden Erfindung hat überraschenderweise gezeigt, dass durch Einsatz einer derartigen Kombination von Säuren mehrere Gruppen von Gram negativen Bakterien gleichzeitig nahezu, ohne dass die gesamte, eingesetzte Säuremenge erhöht wird, vollständig eliminiert werden können, so dass mit einem derartigen Futtermittelzusatz eine unerwartet hohe Leistungssteigerung und Gewichtszunahme der damit gefütterten Tiere erzielt werden kann.

Indem, wie dies einer bevorzugten Weiterbildung der vorliegenden Erfindung entspricht, wenigstens eine niedermolekulare, organische Säure als Salz enthalten ist, wird eine Abpufferung der Säuremischung erzielt, wodurch einerseits eine weitere Absenkung des pH-Werts der Säuremischung mit Sicherheit hintangehalten werden.

Indem, wie dies einer bevorzugten Weiterbildung der Erfindung entspricht, zusätzlich zwischen 0,1 % bis 3 % eines phenolischen Aldehyds enthalten sind, gelingt es neben einer Geschmacksverbesserung des Futtermittelzusatzes das Wirkungsspektrum desselben weiter zu erhöhen und insbesondere die Langzeitwirkung im gesamten Magen-Darm-Trakt weiter zu verbessern, wodurch eine verbesserte Futterumwandlung und somit eine Leistungssteigerung und auch eine Verkürzung der Dauer von Durchfallerkrankungen der damit gefütterten Tiere erzielbar ist.

In einer bevorzugten Weiterbildung der Erfindung ist das zusätzlich in der Säuremischung enthaltene phenolische Aldehyd Zimtaldehyd, wodurch es gelingt, eine besonders hohe Absenkung der Keimzahlen von Bakterienstämmen, insbesondere von Salmonellen, zu erreichen.

Gemäß einer bevorzugten Weiterbindung der Erfindung ist der Futtermittelzusatz dadurch gekennzeichnet, dass ein Mengenverhältnis zwischen der niedermolekularen, organischen Dicarbonsäure und entweder der zweiten niedermolekularen, organischen Dicarbonsäure oder dem Polyphenol oder dem phenolischen Aldehyd zwischen 0,5:1 und 4:1, insbesondere 1:1 und 2:1 beträgt. Indem ein Mengenverhältnis in Gewichtsteilen zwischen der niedermolekularen, organischen Dicarbonsäure und entweder der zweiten niedermolekularen, organischen Dicarbonsäure oder dem Polyphenol oder dem phenolischen Aldehyd eingestellt wird, gelingt es einerseits, die positiven Wirkungen der Inhaltsstoffe des Futtermittelzusatzes vollständig auszunützen und andererseits auch durch Zusatz von extrem niedrigen Konzentrationen einer zweiten niedermolekularen, organischen Dicarbonsäure oder eines Polyphenols oder eines phenolischen Aldehyds, die Keimzahlen an Gram negativen, pathogenen Keimen in dem Futtermittel bzw. nachfolgend im Magen-Darm-Trakt von Tieren weiter drastisch abzusenken, ohne dass der pH-Wert, der Geschmack, die Lagerfähigkeit oder dgl. des Futtermittelzusatzes nachteilig beeinflusst würden.

Als besonders vorteilhaft hat sich ein Futtermittelzusatz erwiesen, wie dies einer bevorzugten Weiterbildung der Erfindung entspricht, wenn dieser einen Gesamtgehalt der Säuremischung zwischen 25 % und 65 % für Säuremischungen auf festem Träger bzw. 25 % und 80 % für flüssige Säuremischungen aufweist. Bei höheren Konzentrationen der Säure verliert der Futtermittelzusatz seine Fließfähigkeit im Falle eines pulverförmigen Produkts und bei niedrigeren Säurengehalten werden sämtlichen positiven Wirkungen der Säuren, wie der anti-mikrobielle Effekt, die Verbesserung der Wirkung von Pepsin, die komplexierende Wirkung für Kationen, wie Kalzium++, Magnesium++ und die Verwendung als Energiequelle nicht mehr ausreichend sichergestellt im Falle einer Konstanthaltung der Dosierung des Futtermittelzusatzes im Fertigfutter.

Um die obigen Effekte sicher und zuverlässig zu erzielen, ist erfindungsgemäß das Futtermittel bevorzugt so weitergebildet, dass neben der wenigstens einen niedermolekularen, organischen Dicarbonsäure wenigstens zwei weitere Säuren, gewählt aus Ameisensäure, Propionsäure, Essigsäure, Milchsäure, Glukonsäure, Zitronensäure, Fumarsäure, Benzoesäure oder Phosphorsäure, enthalten sind. Durch Zusatz von wenigstens zwei weiteren Säuren gewählt aus Ameisensäure, Propionsäure, Essigsäure, Milchsäure, Zitronensäure, Fumarsäure, Benzoesäure oder Phosphorsäure, gelingt es, gezielt spezifische Eigenschaften und einen Synergismus der in dem Futtermittelzusatz enthaltenen Säuremischung zu erreichen, wie es beispielsweise bei Zusatz von Ameisensäure gelingt, die Rate des Eintretens von Durchfallerkrankungen abzusenken, Propionsäure inhibiert stark das Wachstum von Schimmelpilzen, Milchsäure kann die Population von Lactobazillen in dem Magen-Darm-Trakt erhöhen, während gleichzeitig die Anzahl von Colibakterien abgesenkt wird usw. Eine besonders starke Absenkung der Keimzahlen von Colibakterien und Salmonellen wird gemäß einer bevorzugten Weiterbildung der Erfindung mit einem Futtermittefzusatz erzielt, dessen pH-Wert auf Werte zwischen 2,5 und 4,7 eingestellt ist.

So wird beispielsweise durch das Absenken des pH-Werts mittels eines Säurezusatzes im Magen-Darm-Trakt die Wachstumsumgebung für Gram negative Bakterien ungeeignet bzw. nachteilig und überdies werden die Zellwände von Gram negativen Bakterien so stark durchlässig, dass hydrophobe Substanzen, wie Polyphenole und phenolische Aldehyde durch die Zellwand in das Innere der Zelle eindringen können, wodurch den Zellen Energie entzogen wird, welche für ein weiteres Wachstum bzw. eine Vermehrung der Zellen erforderlich wäre, so dass die Vermehrung von Gram negativen Zellen allein durch das Diffundieren von hydrophoben Substanzen gemäß der Erfindung durch die Zellwände stark herabgesetzt wird.

Wie dies einer bevorzugten Weiterbildung der Erfindung entspricht, sind als Träger feste Träger, gewählt aus Tonmineralien, wie natürliche oder synthetische Zeolithe, Bentonit, Silikate, Aluminiumsilikate, Vermicullit, Fructooligosaccharide und/oder Wasser als flüssiger Träger enthalten. Indem feste Träger, wie Tonmineralien, Zeolithe, Silicate oder dgl- oder auch organische Träger, wie Fructooligosaccharide eingesetzt werden, gelingt es bevorzugt organische Dicarbonsäuren auf der Oberfläche des Trägers zu binden und die zugesetzten Säuren sequentiell im Magen-Darm-Trakt freizugeben, so dass an jedem Ort des Magen-Darm-Trakts Gram negative Bakterien, wie E-coli oder Salmonellen oder auch Brachyspiren erfolgreich eliminiert werden können.

Eine bevorzugte Weiterbildung der Erfindung bezieht sich auf ein Fertigfutter, enthaltend einen erfindungsgemäßen Futtermittelzusatz, welcher dadurch gekennzeichnet ist, dass der Futtermittelzusatz in einer Menge von 200 bis 2000 g/Tonne Fertigfutter eingesetzt wird. Dadurch gelingt es einerseits, die positive Wirkung gegenüber schädlichen Keimen zu erzielen und gleichzeitig wird sichergestellt, dass der pH-Wert des Futtermittels nicht zu stark abgesenkt wird.

Die Erfindung ist nachfolgend anhand von Ausführungsbeispielen näher erläutert.

### Beispiel 1: Kükenversuch mit einer Säuremischung gemäß der vorliegenden Erfindung.

Tagesküken wurden bei ihrer Einstallung in Bezug auf Salmonellen untersucht und salmonellenfreie Tiere wurden statistisch einer Fütterung enthaltend eine Säuremischung gemäß der Erfindung bzw. einer Vergleichssäuremischung unterworfen. Hiebei wurden jeweils 18 Tiere in Käfigen in Isolationseinheiten eingestallt und mit einem Futter enthaltend 0,2 % der entsprechenden Säuremischung gefüttert. Wasser und Nahrungsmittel wurden ad libidum verabreicht. Die Vögel wurden im Alter von drei Tagen mit 0,1 ml einer Salmonella enteritidis (SE Nalr/Spcr) Kultur enthaltend 1,0 x 106 CFU/ml inokuliert.

Die Kontrollgruppe wurde mit einer Säuremischung bestehend aus 20 % Ameisensäure, 5 % Propionsäure, 13 % Essigsäure, Rest Wasser versorgt. Die Versuchsgruppe erhielt eine Säuremischung bestehend aus 20 % Ameisensäure, 5 % Propionsäure, 10 % Essigsäure, 1 % Bernsteinsäure und 2 % Apfelsäure.

An den Tagen 5, 7 und 10 wurden jeweils drei Vögel von jeder Gruppe getötet und ihre Kekum-Gehalte wurden in Bezug auf Salmonella enteritidis kultiviert. Die sichtbare Zählung (CFU log 10) von Salmonella enteritidis (SE Nalr/Spcr) in dem Kekum-Gehalt von mit Salmonella enteritidis inokulierten Tieren, die mit Säuremischung behandelt wurden, waren wie folgt:
CFU log 10 (KBE - Koloniebildende Einheiten log 10)
Vergleichsgruppe: 3,64
Versuchs-Gruppe: ---

Aus diesem Versuch ist eindeutig ersichtlich, dass bei Tieren, welche die Säuremischung gemäß der vorliegenden Erfindung erhielten, eine sichtbare Zählung von Salmonella enteritidis nicht mehr vorhanden war.

### Beispiel 2: In vitro Versuch mit verschiedenen Säuremischungen.

Es wurden zwei Versuchsreihen mit verschiedenen Säuremischungen durchgeführt. Die Säuremischungen waren jeweils 35 %-ige Mischungen, deren Wirkung gegen Salmonellen und E-coli untersucht wurde, und insbesondere versucht wurde, den Einfluss von geringen Konzentrationen an kurzkettigen, organischen Dicarbonsäuren bzw. von Polyphenolen oder kurzkettigen organischen Dicarbonsäuren und Polyphenolen auf den pH-Wert zu untersuchen bzw. zu bestimmen.

Hiebei wurden Säuremischungen hergestellt, welche Konzentrationen zwischen 0,1 % und 4 % organische Dicarbonsäuren bzw. phenolische Aldehyde oder Polyphenole oder Mischungen aus Säuren und Polyphenolen enthielten. Zu Nährlösungen enthaltend entweder E-coli Bakterien oder Salmonella enteritidis oder auch beide Bakterienstämme wurden jeweils verschiedene Säuremischungen zugesetzt, so dass ihre Gesamtkonzentration in den Vertiefungen der Versuchsplatten zwischen etwa 0,035 % und 0,001 % betrug. Diese Bakterien wurden hierbei über Nacht in einer Nährlösung kultiviert und dann 200 µl der Kulturlösung, die auf eine optische Dichte von 0,1 +/- 0,015 eingestellt wurde, in Vertiefungen der Versuchsplatten vorgelegt und anschließend wurde die jeweilige Säuremischung hinzugemischt. Bei diesen Versuchen zeigte sich deutlich, dass diese Konzentrationen an niedermolekularen, organischen Dicarbonsäuren aromatische Aldehyden und/oder Polyphenolen eine deutliche Wirkung gegenüber E-coli bzw. Salmonellen aufweisen, ohne dass der pH-Wert der Versuchsbrühe weiter abgesenkt wurde.

Im Einzelnen gelingt es, wenn man eine Säuremischung gewählt aus 20 % Ameisensäure, 5 % Propionsäure und 10 % Essigsäure oder Apfelsäure, Maleinsäure oder Bernsteinsäure zusetzt, die Hemmung des Molekülwachstums von Salmonellen über 50 % herabzusetzen. Wenn zusätzlich zu einer derartigen Mischung noch Ellagsäure zugesetzt wird, können die Keimzahlen in den Vertiefungen um über 60 % abgesenkt werden. Noch deutlicher sind die Ergebnisse, wenn beispielsweise der Säuremischung 1,7 % Zimtaldehyd zugesetzt sind, in welchem Fall eine Absenkung der Keimzahlen um mehr als 60 % erzielbar ist.

Bei Einsatz von erfindungsgemäßen, niedermolekularen, organischen Dicarbonsäuren bzw. Aldehyden und/oder Polyphenolen zu einer Säuremischung bestehend aus 25 % Ameisensäure und 5 % Propionsäure geling es, das Wachstum von Salmonellen um über 80 % abzusenken. Analoge Ergebnisse erzielt man, wenn eine Säuremischung bestehend aus Ameisensäure 20 % und Essigsäure 15 % mit einer Mischung aus Bernsteinsäure und Ellagsäure insgesamt durchgeführt wird. Hier gelingt es ebenfalls, die Keimzahlen um bis zu 80 % abzusenken. Die entsprechenden Ergebnisse sind in der nachfolgenden Tabelle 1 dargestellt.

**TABELLE 1**

| Hemmung verschiedener E-Coli und Salmonella sp. Keime mit verschiedenen Säuremischungen [in Prozent Wachstum] | | | | |
|---|---|---|---|---|
| | Salmonella sp. 1 | Salmonella sp. 2 | E-Coli sp. 1 | E-Coli sp. 2 |
| Säuremischung | -0,66 | 14,3 | 17,6 | 0,08 |
| Säuremischung | - | 15,1 | 25,1 | 12,5 |
| + 1 % Milchsäure | | | | |
| + 2 % Milchsäure | - | 21,2 | - | - |
| + 4 % Milchsäure | - | 23,4 | - | - |
| | | | | |
| Säuremischung | 19,6 | 18,3 | - | - |
| + 1 % Bernsteinsäure | | | | |
| + 2 % Bernsteinsäure | 26,4 | 27,5 | - | - |
| + 4 % Bernsteinsäure | 47,8 | 48,4 | - | - |
| | | | | |
| Säuremischung | 19,5 | - | - | - |
| + 1 % Ellagsäure | | | | |
| + 2 % Ellagsäure | 26,3 | - | - | - |
| + 4 % Ellagsäure | 38,3 | - | - | - |
| | | | | |
| Säuremischung | | | | |
| + insgesamt | 17,8 | 30,3 | 36,2 | 13,5 |
| 1 % Ellagsäure + | | | | |
| Bernsteinsäure | | | | |
| + insgesamt | | | | |
| 2 % Ellagsäure + | 79,9 | 85,8 | 58,4 | 22,3 |
| Bernsteinsäure | | | | |
| + insgesamt | | | | |
| 4 % Ellagsäure + | 57,3 | 28,8 | 55,0 | 58,9 |
| Bernsteinsäure | | | | |
| | | | | |
| Säuremischung | | | | |
| + insgesamt | | | | |
| 1 % Ellagsäure + | 18,0 | 22,9 | 13,1 | - |
| Bernsteinsäure + | | | | |
| Milchsäure | | | | |
| + insgesamt | | | | |
| 2 % Ellagsäure + | 25,0 | 33,2 | 17,6 | - |
| Bernsteinsäure + | | | | |
| Milchsäure | | | | |
| + insgesamt | | | | |
| 4 % Ellagsäure + | 52,3 | 80,9 | 56,0 | - |
| Bernsteinsäure + | | | | |
| Milchsäure | | | | |
| | | | | |
| Säuremischung | - | - | 22,5 | - |
| + 1 % Apfelsäure | | | | |
| + 2 % Apfelsäure | - | - | 37,7 | - |
| + 4 % Apfelsäure | - | - | 54,4 | - |
| | | | | |
| Säuremischung | - | - | 12,1 | - |
| + 1 % Maleinsäure | | | | |
| + 2 % Maleinsäure | - | - | 26,6 | - |
| + 4 % Maleinsäure | - | - | 42,5 | - |
| | | | | |
| Säuremischung | - | - | - | 17,6 |
| + 1 % Malonsäure | | | | |
| + 2 % Malonsäure | - | - | - | 30,6 |
| + 4 % Malonsäure | - | - | - | 48,7 |
| | | | | |
| Säuremischung | - | - | - | 15,4 |
| + 1 % Glutarsäure | | | | |
| + 2 % Glutarsäure | - | - | - | 54,0 |
| + 4 % Glutarsäure | - | - | - | 51,3 |
| | | | | |
| Säuremischung | - | - | - | -0,1 |
| + 1 % Weinsäure | | | | |
| + 2 % Weinsäure | - | - | - | 6,4 |
| + 4 % Weinsäure | - | - | - | 60,6 |

| | | | | |
|---|---|---|---|---|
| - = nicht analysiert | | | | |

Gleichzeitig mit der Hemmung des Wachstums der Keime wird jedoch durch Zusatz der niedermolekularen, organischen Säuren bzw. phenolischen Aldehyde und/oder Polyphenole der pH-Wert der Arbeitslösung bzw. Nährbouillon nicht bzw. nur unwesentlich beeinflusst, wie dies der nachfolgenden Tabelle 2 entnehmbar ist.

**Tabelle 2**

| | Konzentration [% von SM] | pH-Wert in der Arbeitslösung |
|---|---|---|
| Nährbouillon | - | 7,13 |
| Nur Säuremischung | - | 4,52 |
| 1) Ellagsäure | 0,25 % | 4,52 |
| | 0,5 % | 4,45 |
| | 1 % | 4,50 |
| 2) Bernsteinsäure | 2 % | - |
| | 4 % | 4,51 |
| | 8 % | 4,45 |
| 3) Milchsäure | 2 % | - |
| | 4 % | 4,45 |
| | 8 % | 4,42 |
| 4) Ellagsäure + Bernsteinsäure (B) | 0,25 % E + 2 % B | 4,48 |
| | 0,5 % E + 4 % B | 4,46 |
| | 1 % E + 8 % B | 4,42 |
| 5) Ellagsäure + Bernsteinsäure + Milchsäure | 0,125 % E + 1 % B + 1 % M | - |
| | 0,25 % E + 2 % B + 2 % M | 4,52 |
| | 0,5 % E + 4 % B + 4 % M | 4,41 |

| | | |
|---|---|---|
| Sämtliche Prozentangaben sind in diesem Kontext als Gew.-% zu verstehen. SM = Säuremischung aus 20% Ameisensäure + 5% Propionsäure + 10% Essigsäure | | |

Aus Tabelle 2 ist ersichtlich, dass die Bouillon ohne Zusatz von Säure einen pH-Wert von 7,13 aufweist, die Säuremischung alleine einen pH-Wert von 4,52 aufweist und dass der Zusatz von Ellagsäure, Bernsteinsäure und Milchsäure eine Absetzung des pH-Werts auf ein Minimum von 4,41 bewirkte, so dass insgesamt neben oben gezeigten positiven Effekten der Absenkung der Keimzahlen eine pH-Wert-Absenkung durch den Zusatz von niedermolekularen Dicarbonsäuren im wesentlichen nicht bewirkt wird.

### Beispiel 3: Wirksamkeitstest der erfindungsgemäßen Säuremischungen bei Schweinen.

In einem Schweinemastbetrieb in Österreich mit etwa 900 Säuen konnte Durchfall während des Säugens nicht verhindert werden, obwohl autogene, orale und parenterale Impfungen angewandt wurden und kontinuierlich Antibiotika verabreicht wurden. Die Antibiogramme zeigten, dass sich die Resistenzen alle vier bis 6 Wochen veränderten, nachdem die entsprechenden Antibiotika für den obigen Zweck eingesetzt wurden.

Die pathogenen E-coli Serotypen 08, 0138, 0141 und 0147 wurden aus Fäkalproben isoliert.

Zur Untersuchung der Wirkung von Futtermittelzusätzen, enthaltend Säuremischungen gemäß der Erfindung, wurden
1) 1.623 Absetzferkel mit Standardfutter enthaltend eine Säuremischung 1 (AM1) bestehend aus 20 % Ameisensäure + 10 % Essigsäure + 1 % Bernsteinsäure + 0,1 % Ellagsäure für 19 Tage nach dem Absetzen gefüttert, wobei 20 Tiere von diesen (= 1,2 %) aufgrund von E-coli Infektionen starben. 724 Ferkel wurden mit einem konventionellen Ferkelstarter, welcher 20 % Ameisensäure + 10 % Essigsäure enthielt, in derselben Zeitdauer gefüttert, wovon 69 Ferkel (= 9,5 %) während der ersten drei Wochen nach dem Absetzen starben.
2) 30 Absetzferkel mit einer hohen Diarrhoea-Auftretensrate statistisch in drei Gruppen mit jeweils 10 Tieren unterteilt und die drei Gruppen wurden mit einer Säuremischung 2 (AM2) bestehend aus 25 % Ameisensäure + 5 % Propionsäure + 1,5 % Bernsteinsäure + 1,5 % Apfelsäure, Gruppe 2 mit 20 % Ameisensäure + 5 % Propionsäure + 10 % Essigsäure und 3 % Zimtaldehyd (AM3) gefüttert sowie die Vergleichsgruppe mit 25 % Ameisensäure und 8 % Propionsäure.

8 Tage nach dem Absetzen wurden 100 ml E-coli-bouillon mit enteropathogenen E-coli Serotypen 08, 0138, 0139, 0141 und 0147 dem Futtermittel zugesetzt, wobei ein ml Bouillon 108 Keime enthielt.

Nach dem Füttern mit den Keimen wurden täglich Fäkalproben von allen Tieren genommen. Die Tiere wurden täglich in Bezug auf das Auftreten von Diarrhoea getestet. Weiterhin wurde täglich die weitere Futteraufnahme pro Gruppe gemessen. Alle 5 Tage wurden die Ferkel individuell gewogen. Das Auftreten von Diarrhoea am Tag 5 nach Versuchsbeginn, d.h. zwei Tage nach der Infektion war:
20 %, 2 Ferkel aus der Gruppe AM2
16 %, 6 Ferkel aus der Gruppe AM3
100 %, 10 Ferkel aus der Vergleichsgruppe.
Am Tag 10 nach Versuchbeginn:
10 %, 1 Ferkel aus der Gruppe AM2
50 %, 5 Ferkel aus der Gruppe AM3
100 %, 10 Ferkel aus der Vergleichsgruppe.
Am Tag 15 nach Versuchsbeginn:
0 %, kein Ferkel aus der Gruppe AM2
12,5 %, 1 Ferkel aus der Gruppe AM3
14,2 %, 1 Ferkel aus der Vergleichsgruppe.

Während des Versuchs starben aus der Gruppe AM2 keine Ferkel, aus der Gruppe AM3 2 Ferkel und aus der Vergleichsgruppe 3 Ferkel.

### Gewichtszunahme:

Das mittlere Gewicht der Ferkel am Beginn des Versuchs war in der Gruppe AM2 6,34 kg, in der Gruppe AM3 6,52 kg, in der Vergleichsgruppe 6,51 kg. Das mittlere Gewicht der Ferkel am Ende des Versuchs war in der Gruppe AM2 9,6 kg, in der Gruppe AM3 8,9 kg und in der Vergleichsgruppe 8,1 kg.
3) Ein Stall bestehend aus 2 Reihen mit Käfigen enthaltend insgesamt 196 Milchferkel mit ihren Säuen wurde in eine Versuchsreihe, die mit konventionellem Ferkelstarter gefüttert wurde, welchem 0,3 % einer Säuremischung (AM4) bestehend aus 20 % Ameisensäure + 10 % Essigsäure + 1,5 % Apfelsäure + 0,2 % Ellagsäure zugesetzt wurde, und in eine Vergleichsgruppe, welche nur Ameisensäure 20 % und Essigsäure 15 % erhielt, unterteilt. Alle Tiere blieben in dem Stall für eine Woche. Während dieses Versuchs wurde das tägliche Auftreten von Diarrhoea notiert. Weiters wurden Fäkalproben von 2 Käfigen in jeder Stallungsreihe jeden dritten Tag genommen, ebenso wie von sämtlichen Ferkeln, welche an Diarrhoea litten. Während der ersten Woche starben 6 % der Ferkel aus der konventionell gefütterten Reihe, 1 % von der AM 4 Reihe. Aus den 300 Fäkalproben, welche bei den Vergleichsferkeln gezogen wurden, zeigte sich eine hohe, vorherrschende Wirkung von Diarrhoea, wobei die enteropathogenen E-Coli Serotypen und 08, 0138, 0139, 0141 und 147 isoliert wurden.
4) 96 Ferkel aus den Ställen mit erhöhtem Diarrhoea-Auftreten wurden in drei Gruppen mit jeweils 32 Tieren unterteilt und mit Säuremischungen gefüttert.

Gruppe I (AM5): 25 % Ameisensäure + 5 % Propionsäure + 1,5 % Bernsteinsäure, 1,5 % Apfelsäure, 1 % Milchsäure + 0,05 % Ellagsäure.

Gruppe II (AM6): 20 % Ameisensäure + 5 % Propionsäure, 10 % Essigsäure, 1,5 % Apfelsäure.

Vergleich: 25 % Ameisensäure + 5 % Propionsäure.

Die Infektion der Ferkel wurde am vierten Tag nach dem Absetzen gestartet. 1 I E-coli Mischbouillon wurde in 4 kg Futter pro Gruppe inkorporiert, wobei 1 ml Bouillon 109 Keime enthielt. Die Futtertröge wurden für 24 Stunden geleert und alle Tröge wurden geeignet gereinigt und desinfiziert.

### Auftreten von Diarrhoea:

Einen Tag nach der Infektion zeigten 90 % bis 100 % der Ferkel in der Vergleichsgruppe schwere Diarrhoea. 5 Tage dauerte es, bis nur mehr die Hälfte der Tiere Diarrhoea hatte. In der Gruppe AM5 zeigten nur zwei Tiere schwere Diarrhoea nach der Infektion, welche zwei Tage dauerte. Von Tag 5 an gab es keinerlei Diarrhoea in dieser Gruppe. In Gruppe AM6 zeigte 1 Tier Diarrhoea für einen Tag.
Resultate: Verluste
Gruppe 1 AM5 - 2 Verluste
Gruppe 2 AM6 - 4 Verluste
Gruppe 3 Vergleich - 16 Verluste

Der mittlere Gewichtszuwachs in dem Zeitpunkt des Versuchs war wie folgt:
AM5 - 4,0 kg
AM6 - 3,9 kg
Vergleich - 1,0 kg.

Insgesamt ist aus diesen Ergebnissen klar ersichtlich, dass der Zusatz von niedermolekularen Dicarbonsäuren ebenso wie gegebenenfalls der zusätzliche Zusatz von aromatischen Aldehyden bzw. Polyphenolen eine extrem positive Wirkung auf den Gesundheitszustand der Ferkel ebenso wie auf deren Gewichtszunahme hatte.

### Beispiel 4: Fischversuch

5 verschiedene Säuremischungen enthaltend Futtermittelzusätze wurden in einem Fütterungsversuch mit Tilapia getestet, wobei pro Versuchsgruppe drei Wiederholungen erfolgten. Die Fische erhielten kommerzielles Futter, das nach Zugabe des Futtermittelzusatzes enthaltend Säuremischungen (Endkonzentration 0,1 %) pelletiert wurde. Parameter die wöchentlich erhoben wurden, waren Überlebensrate, Gewichtszunahme bzw. durchschnittliches Gewicht, Futterverwertung (FCR). 60 juvenile rote Tilapia mit einem Gewicht von 45 g wurden in jeweils einem der 12 Tanks mit je 500 I gehalten, wobei dreimal täglich über einen Zeitraum von 56 Tagen gefüttert wurde.

Die Ergebnisse sind in Tabelle 3 gezeigt.
Säuremix 1 = 20 % Ameisensäure/5 % Propionsäure/10 % Essigsäure
Säuremix 2 = 20 % Ameisensäure/5 % Propionsäure/5 % Essigsäure/4 % Bernsteinsäure/0,5 % Ellagsäure
Säuremix 3 = 20 % Ameisensäure/5 % Propionsäure/5 % Essigsäure/4 % Maleinsäure/ 0,5 % Ellagsäure
Säuremix 4 = 20 % Ameisensäure/5 % Porpionsäure/5 % Essigsäure/2 % Bernsteinsäure/2 % Apfelsäure/0,5 % Ellagsäure
Säuremix 5 = 20 % Ameisensäure/5 % Propionsäure/2 % Essigsäure/2 % Bernsteinsäure/0,5 Ellagsäure

**Tabelle 3**

| Säuremix | # Start | # Ende | % Mortalität | Gewicht Start | Gewicht Ende | Zunahme | FCR |
|---|---|---|---|---|---|---|---|
| 1 | 60 | 57 | 5 | 45,0 | 152,3 | 107.3 | 1,69 |
| 1 | 60 | 54 | 10 | 45,0 | 154,5 | 109,5 | 1,62 |
| 1 | 60 | 56 | 6,67 | 45,0 | 152,7 | 107,7 | 1,68 |
| 2 | 60 | 60 | 0 | 45,0 | 157,6 | 112,6 | 1,57 |
| 2 | 60 | 58 | 3,33 | 45,1 | 157,3 | 112,2 | 1,54 |
| 2 | 60 | 59 | 1.67 | 45.0 | 160,2 | 115,2 | 1,59 |
| 3 | 60 | 59 | 1,67 | 45,0 | 156,4 | 116,4 | 1,61 |
| 3 | 60 | 57 | 5 | 45,0 | 158,1 | 113,1 | 1,58 |
| 3 | 60 | 58 | 3,33 | 45,1 | 161,1 | 116,0 | 1,53 |
| 4 | 60 | 60 | 0 | 45,0 | 160,3 | 115,3 | 1,65 |
| 4 | 60 | 57 | 5 | 45,0 | 157,5 | 112,5 | 1,59 |
| 4 | 60 | 58 | 3,33 | 45,0 | 158,1 | 113,1 | 1,58 |
| 5 | 60 | 59 | 1,67 | 45,1 | 160,2 | 115,1 | 1,57 |
| 5 | 60 | 59 | 1,67 | 45,1 | 161,9 | 116,8 | 1,62 |
| 5 | 60 | 57 | 5 | 45,1 | 158,9 | 113,9 | 1,60 |

Aus diesem Versuch ist eindeutlich erkenntlich, dass die Tiere, welche nur eine herkömmliche Säuremischung erhielten, die geringste Gewichtszunahme bei gleichzeitig erhöhter Mortalität zeigten.

## Patentansprüche

1. Futtermittelzusatz enthaltend eine Säuremischung, welche wenigstens eine niedermolekulare, organische Monocarbonsäure gewählt aus Ameisensäure, Propionsäure, Essigsäure, Milchsäure oder Glukonsäure, sowie entweder eine weitere organische Monocarbonsäure oder eine anorganische Säure und einen festen oder flüssigen Träger enthält, **dadurch gekennzeichnet, dass** die Säuremischung zusätzlich wenigstens eine niedermolekulare, organische Dicarbonsäure gewählt aus Glutaminsäure, Weinsäure, Korksäure, Malonsäure, Bernsteinsäure, Apfelsäure oder Maleinsäure enthält und dass zusätzlich zwischen 0,01 % und 1 % eines Polyphenols wie Tanninsäure, Kaffeesäure, Ellagsäure, Perillasäure oder Gallussäure, oder zwischen 0,1 % und 5 % eines phenolischen Aldehyds enthalten sind.

2. Futtermittelzusatz nach Anspruch 1, **dadurch gekennzeichnet, dass** in der Säuremischung zwischen 0,035 % und 35 %, insbesondere 7 % bis 13 % niedermolekulare, organische Dicarbonsäure enthalten sind.

3. Futtermittelzusatz nach Anspruch 1 oder 2, **dadurch gekennzeichnet, dass** zwei niedermolekulare, organische Dicarbonsäuren enthalten sind.

4. Futtermittelzusatz nach Anspruch 1, 2 oder 3, **dadurch gekennzeichnet, dass** wenigstens eine niedermolekulare, organische Säure als Salz enthalten ist.

5. Futtermittelzusatz nach einem der Ansprüche 1 bis 4, **dadurch gekennzeichnet, dass** zwischen 0,1 % bis 3 % eines phenolischen Aldehyds enthalten sind.

6. Futtermittelzusatz nach einem der Ansprüche 1 bis 5, **dadurch gekennzeichnet, dass** das phenolische Aldehyd Zimtaldehyd ist.

7. Futtermittelzusatz nach einem der Ansprüche 1 bis 6, **dadurch gekennzeichnet, dass** ein Mengenverhältnis zwischen der niedermolekularen, organischen Dicarbonsäure und entweder der zweiten niedermolekularen, organischen Dicarbonsäure oder dem Polyphenol oder dem phenolischen Aldehyd zwischen 0,5:1 und 4.1, insbesondere zwischen 1:1 und 2:1 beträgt.

8. Futtermittelzusatz nach einem der Ansprüche 1 bis 7, **dadurch gekennzeichnet, dass** zwischen 25 % und 65 % Säuremischung auf festem Träger oder zwischen 25 % und 80 % flüssige Säuremischung enthalten sind.

9. Futtermittelzusatz nach einem der Ansprüche 1 bis 8, **dadurch gekennzeichnet, dass** die zusätzlich zu der wenigstens einen niedermolekularen, organischen Dicarbonsäure wenigstens zwei weiteren Säuren, aus Ameisensäure, Propionsäure, Essigsäure, Milchsäure, Glukonsäure, Zitronensäure, Fumarsäure, Benzoesäure, Phosphorsäure, Salzsäure oder Schwefelsäure gewählt sind.

10. Futtermittelzusatz nach einem der Ansprüche 1 bis 9, **dadurch gekennzeichnet, dass** der pH-Wert auf Werte zwischen 2,5 und 4,7 eingestellt ist.

11. Futtermittelzusatz nach einem der Ansprüche 1 bis 10, **dadurch gekennzeichnet, dass** als Träger feste Träger, gewählt aus Tonmineralien, wie natürliche oder synthetische Zeolithe, Bentonit, Silikate, Aluminiumsilikate, Vermicullit, Fructooligosaccharide und/oder Wasser als flüssiger Träger enthalten sind.

12. Fertigfutter enthaltend einen Futtermittelzusatz nach einem der Ansprüche 1 bis 11, **dadurch gekennzeichnet, dass** der Futtermittelzusatz in einer Menge von 200 g bis 2000 g pro Tonne Fertigfutter eingesetzt ist.

13. Verwendung von wenigstens einer, aus Glutaminsäure, Weinsäure, Korksäure, Malonsäure, Bernsteinsäure, Apfelsäure oder Maleinsäure gewählten, niedermolekularen, organischen Dicarbonsäure als Zusatz zu einem wenigstens eine niedermolekulare, organische Monocarbonsäure gewählt aus Ameisensäure, Propionsäure, Essigsäure, Milchsäure oder Glukonsäure, sowie entweder eine weitere organische Monocarbonsäure oder eine anorganische Säure und einen festen oder flüssigen Träger und zwischen 0,01 % und 1 % eines Polyphenols wie Tanninsäure, Kaffeesäure, Ellagsäure, Perillasäure oder Gallussäure, oder zwischen 0,1 % und 5 % eines phenolischen Aldehyds enthaltenden Futtermittel.

## Claims

1. A feed additive containing an acid mixture comprising at least one low-molecular-weight organic monocarboxylic acid selected from formic acid, propionic acid, acetic acid, lactic acid or gluconic acid, and either a further organic monocarboxylic acid or an inorganic acid and a solid or liquid carrier, **characterized in that** the acid mixture additionally comprises at least one low-molecular-weight organic dicarboxylic acid selected from glutamic acid, tartaric acid, suberic acid, malonic acid, succinic acid, malic acid or maleic acid, and that between 0.01% and 1% of a polyphenol such as tannic acid, caffeic acid, ellagic acid, perillic acid or gallic acid, or between 0.1% and 5% of a phenolic aldehyde is additionally contained.

2. A feed additive according to claim 1, **characterized in that** between 0.035% and 35%, in particular 7% to 13%, low-molecular-weight organic dicarboxylic acid is contained in the acid mixture.

3. A feed additive according to claim 1 or 2, **characterized in that** two low-molecular-weight organic dicarboxylic acids are contained.

4. A feed additive according to claim 1, 2 or 3, **characterized in that** at least one low-molecular-weight organic acid is contained as salt.

5. A feed additive according to any one of claims 1 to 4, **characterized in that** between 0.1% and 3% of a phenolic aldehyde is contained.

6. A feed additive according to any one of claims 1 to 5, **characterized in that** the phenolic aldehyde is cinnamaldehyde.

7. A feed additive according to any one of claims 1 to 6, **characterized in that** a quantitative ratio between the low-molecular-weight organic dicarboxylic acid and either the second low-molecular-weight organic dicarboxylic acid or the polyphenol or the phenolic aldehyde ranges between 0.5:1 and 4:1, in particular between 1:1 and 2:1.

8. A feed additive according to any one of claims 1 to 7, **characterized in that** between 25% and 65% acid mixture on a solid carrier, or between 25% and 80% liquid acid mixture, is contained.

9. A feed additive according to any one of claims 1 to 8, **characterized in that** the at least two further acids in addition to the at least one low-molecular-weight organic dicarboxylic acid are selected from formic acid, propionic acid, acetic acid, lactic acid, gluconic acid, citric acid, fumaric acid, benzoic acid, phosphoric acid, hydrochloric acid or sulphuric acid.

10. A feed additive according to any one of claims 1 to 9, **characterized in that** the pH is adjusted to values between 2.5 and 4.7.

11. A feed additive according to any one of claims 1 to 10, **characterized in that** solid carriers selected from clay minerals such as natural or synthetic zeolites, bentonite, silicates, aluminium silicates, vermiculite, fructooligosaccharides and/or water as liquid carrier are contained as carriers.

12. A ready-made feed comprising a feed additive according to any one of claims 1 to 11, **characterized in that** said feed additive is used in amounts from 200g to 2000g per of ton ready-made feed.

13. The use of at least one low-molecular-weight organic dicarboxylic acid selected from glutamic acid, tartaric acid, suberic acid, malonic acid, succinic acid, malic acid or maleic acid as an additive to a feed comprising at least one low-molecular-weight organic monocarboxylic acid selected from formic acid, propionic acid, acetic acid, lactic acid or gluconic acid, and either a further organic monocarboxylic acid or an inorganic acid and a solid or liquid carrier, and between 0.01% and 1% of a polyphenol such as tannic acid, caffeic acid, ellagic acid, perillic acid or gallic acid, or between 0.1% and 5% of a phenolic aldehyde.

## Revendications

1. Additif pour produit alimentaire pour animaux contenant un mélange d'acides, qui contient au moins un acide monocarboxylique organique de faible poids moléculaire, choisi parmi l'acide formique, l'acide propionique, l'acide acétique, l'acide lactique ou l'acide gluconique, et soit un autre acide monocarboxylique organique soit un acide inorganique et un support solide ou liquide, **caractérisé en ce que** le mélange d'acides contient en plus au moins un acide dicarboxylique organique de faible poids moléculaire, choisi parmi l'acide glutamique, l'acide tartrique, l'acide subérique, l'acide malonique, l'acide succinique, l'acide malique ou l'acide maléique, et qu'entre 0,01 % et 1 % d'un polyphénol tel que l'acide tannique, l'acide caféique, l'acide ellagique, l'acide périllique ou l'acide gallique, ou entre 0,1 % et 5 % d'un aldéhyde phénolique sont présents en plus.

2. Additif pour produit alimentaire pour animaux selon la revendication 1, **caractérisé en ce que**, dans le mélange d'acides, entre 0,035 % et 35 %, en particulier 7 % à 13 %, d'acide dicarboxylique organique de faible poids moléculaire sont présents.

3. Additif pour produit alimentaire pour animaux selon la revendication 1 ou 2, **caractérisé en ce que** deux acides dicarboxyliques organiques de faible poids moléculaire sont présents.

4. Additif pour produit alimentaire pour animaux selon la revendication 1, 2 ou 3, **caractérisé en ce qu'**au moins un acide organique de faible poids moléculaire est présent en tant que sel.

5. Additif pour produit alimentaire pour animaux selon l'une des revendications 1 à 4, **caractérisé en ce qu'**entre 0,1 % à 3 % d'un aldéhyde phénolique sont présents.

6. Additif pour produit alimentaire pour animaux selon l'une des revendications 1 à 5, **caractérisé en ce que** l'aldéhyde phénolique est l'aldéhyde cinnamique.

7. Additif pour produit alimentaire pour animaux selon l'une des revendications 1 à 6, **caractérisé en ce qu'**un rapport quantitatif entre l'acide dicarboxylique organique de faible poids moléculaire et soit le deuxième acide dicarboxylique organique de faible poids moléculaire soit le polyphénol soit l'aldéhyde phénolique est compris entre 0,5:1 et 4:1, en particulier entre 1:1 et 2:1.

8. Additif pour produit alimentaire pour animaux selon l'une des revendications 1 à 7, **caractérisé en ce qu'**entre 25 % et 65 % du mélange d'acides sont présents sur le support solide ou entre 25 % et 80 % du mélange d'acides liquide.

9. Additif pour produit alimentaire pour animaux selon l'une des revendications 1 à 8, **caractérisé en ce que** les au moins deux autres acides en plus de l'au moins un acide dicarboxylique organique de faible poids moléculaire sont choisis parmi l'acide formique, l'acide propionique, l'acide acétique, l'acide lactique, l'acide gluconique, l'acide citrique, l'acide fumarique, l'acide benzoïque, l'acide phosphorique, l'acide nitrique ou l'acide sulfurique.

10. Additif pour produit alimentaire pour animaux selon l'une des revendications 1 à 9, **caractérisé en ce que** le pH est ajusté à des valeurs comprises entre 2,5 et 4,7.

11. Additif pour produit alimentaire pour animaux selon l'une des revendications 1 à 10, **caractérisé en ce que** des supports solides choisis parmi les minéraux argileux, comme les zéolithes naturelles ou synthétiques, la bentonite, les silicates, les aluminosilicates, la vermiculite, les fructo-oligosaccharides sont présents en tant que supports et/ou de l'eau en tant que support liquide.

12. Produit alimentaire pour animaux fini contenant un additif pour produit alimentaire pour animaux selon l'une des revendications 1 à 11, **caractérisé en ce que** l'additif pour produit alimentaire pour animaux est mis en oeuvre en une quantité de 200 g à 2000 g par tonne de produit alimentaire pour animaux fini.

13. Utilisation d'au moins un acide dicarboxylique organique de faible poids moléculaire, choisi parmi l'acide glutamique, l'acide tartrique, l'acide subérique, l'acide malonique, l'acide succinique, l'acide malique ou l'acide maléique en tant qu'additif d'un produit alimentaire pour animaux contenant au moins un acide monocarboxylique organique de faible poids moléculaire choisi parmi l'acide formique, l'acide propionique, l'acide acétique, l'acide lactique ou l'acide gluconique, et soit un autre acide monocarboxylique organique soit un acide inorganique et un support solide ou liquide et entre 0,01 % et 1 % d'un polyphénol tel que l'acide tannique, l'acide caféique, l'acide ellagique, l'acide périllique ou l'acide gallique, ou entre 0,1 % et 5 % d'un aldéhyde phénolique.
